# EUROPEAN PATENT APPLICATION

(11) **EP 3 480 235 A1**
(43) Date of publication of application: **08.05.2019**
(21) Application number: 17200011.9
(22) Date of filing: 03.11.2017
(51) Int. Cl.: C08G 18/76, C08G 18/20, C08G 18/48, C08L 9/02, C08L 9/06, C08L 19/00, C08L 23/16, E01C 13/00

(54) **GENERATION OF A PU-RUBBER-POWDER FLOOR PANEL USING A THERMO-SELECTIVE CATALYST**

(71) Applicant: Polytex Sportbeläge Produktions-GmbH, 47929 Grefrath (DE)
(72) Inventor: SICK, Stephan, 47877 Willich (DE); FINDER, Zdenka, 86701 Rohrenfels (DE)
(74) Representative: Richardt Patentanwälte PartG mbB

(57) **Abstract**

The invention relates to a method of producing a polyurethane floor panel (320), the method comprising:
- mixing (102) rubber powder (308), a polyol (302), an isocyanate component (304) and a thermo-sensitive catalyst (306) for creating a liquid two-component polyurethane reaction mixture (208), the thermo-sensitive catalyst (306) being adapted to trigger the reaction of the polyols and the isocyanate into polyurethane selectively in case the temperature of the reaction mixture exceeds an activation temperature of the thermo-selective catalyst;
- stirring (104) the reaction mixture for at least 15 minutes;
- filling (106) the stirred liquid reaction mixture into a mold (202);
- applying (108) pressure under a temperature that exceeds the activation temperature on the mold; and
- removing (110) the hardened polyurethane floor panel from the mold.

## Description

### Field of the invention

The invention relates to the production of polyurethane-based floor panels.

### Background and related art

PU-based floor panels and floor covering boards are commonly used for surfacing playgrounds and sports fields (see, for example, the British patent number 1, 178, 949. The manufacturer of floor panels according to state of the art methods comprises blending rubber particles with a PU-based adhesive, placing the PU-impregnated rubber particles into a form and leaving the impregnated particles within the form until the PU-adhesive is cured.

It has been found that floor panels manufactured by such a process have several disadvantages and also the process itself is affected by several technical problems. In particular, thin floor panels having exact measurements and/or having depressions or elevations can be manufactured only with difficulties because it is nearly impossible to place the rubber particles sufficiently uniformly into the form so that a floor panel with a homogeneous composition and material properties is obtained. Moreover, the liquid PU/rubber mixture often does not wet the inner surface of the mold completely, in particular if the mold comprises depressions or elevations, because the mixture is too viscous to penetrate small cavities. In particular, it may happen that the polymerization reaction has already completed before the reaction mixture has reached and penetrated the depressions.

A further problem is that some systems use water as a catalyst for triggering the polymerization and hardening of a single-component (1 K) PU adhesive. The use of water as a catalyst causes the generation of carbon dioxide which form gas bubbles within the floor panel material. The gas bubbles may destroy the smooth appearance of the surface, may damage the mold and may also mechanically destabilize floor panels, in particular floor panels which are only few millimeters thick. Moreover, the water acting as catalyst had to be added in a separate step after the rubber and the 1 K PU reaction system were mixed with each other, thereby complicating the production process.

A further problem is that the removal of the hardened PU/rubber floor panels from a mold is difficult and often causes damage to the panel, because the material is subjected to tensions if the polyurethane adhesive used for the rubber particles is not completely cured. Adjusting and leveling off the finished floor panels by grinding the edges is cumbersome and difficult.

### Summary

It is an objective of the present invention to provide for an improved method for producing floor panels and corresponding floor panels as specified in the independent claims. Embodiments of the invention are given in the dependent claims. Embodiments of the present invention can be freely combined with each other if they are not mutually exclusive.

In one aspect, the invention relates to a method of producing a polyurethane floor panel. The method comprises mixing rubber powder, a polyol component, an isocyanate component and a thermo-sensitive catalyst for creating a liquid two-component polyurethane reaction mixture. The thermo-sensitive catalyst is adapted to trigger the reaction of the polyols and the isocyanate into polyurethane selectively in case the temperature of the reaction mixture exceeds an activation temperature of the thermo-selective catalyst. The method further comprises stirring the reaction mixture for at least 15 minutes, preferably for at least 30 minutes or even at least 50 minutes and filling the stirred liquid reaction mixture into a mold having the shape of the floor panel. Then, pressure is applied on the mold under a temperature that exceeds the activation temperature for letting the polyol and the isocyanate react within the mold into a solid polyurethane matrix. The matrix embeds the rubber powder particles and forms the polyurethane floor panel. The method further comprises removing the hardened polyurethane floor panel from the mold.

These features may be advantageous, because a PU-rubber-reaction mixture is obtained that does not polymerize into the final PU immediately and thus can be stirred for a long time. As a result, a homogeneous distribution of the rubber powder particles within the PU matrix is achieved and the generation of gas bubbles is avoided.

In a further beneficial aspect, the handling of the PU reaction mixture may greatly be facilitated compared to an alternative approach that was also evaluated. This alternative approach can be characterized as a "two-step application of a 1 K PU adhesive", in a first step, rubber particles are mixed with a PU-pre-polymer without adding any catalysts. Then, in a second step, water is added as a catalyst. Thereby a "one component reaction mixture - 1 K reaction mixture" is generated. The 1 K reaction mixture is filled into the mold. A downside of this alternative approach is that as soon as the catalyst (water) is added to the 1 K mixture, the mixture needs to be filled into the mold immediately to prevent premature hardening thus, the catalyst is often not homogeneously distributed within the polyol, isocyanate and rubber components. This results in significant differences of the reaction speed in different regions of the mold: in some regions, the PU generation reaction may terminate too fast, thereby preventing the reaction mixture to reach small depressions and cavities of the mold. In other regions, the PU generation reaction may be so slow that the reaction has not completed when the panel is removed from the mold, resulting in destroyed panel structures or in a separation of a rubber-particle dominated region and a PU-dominated region. Thus, embodiments of the invention allow to apply a single-step approach that results in a bubble-free product rather than a more complex, two-step approach that typically generates a product comprising undesired CO2 bubbles.

Applying high pressure may allow to produce floor panels having a desired density and degree of stability.

To the contrary, the stirring of the reaction mixture including the catalyst for at least 15 minutes or (preferably) longer may allow gasses (already included in the porous rubber dust particles or reaction gasses resulting from residual water of the rubber powder prematurely reacting with the isocyanate component) to leave the reaction mixture before the mixture is filled into the mold. Thereby, the generation of gas bubbles during the hardening of the floor panel can be avoided. In addition, the stirring of the reaction mixture may allow obtaining a homogeneous distribution of the rubber powder particles and the thermo-selective catalyst within the reaction mixture. Thus, the generation of clusters of rubber powder particles and regions within the mold with different reaction speeds can be avoided, thereby ensuring homogeneous properties of the resulting floor panel.

In a further beneficial aspect, the method is more robust against residual water, because the prolonged stirring time of the reaction mixture allows the water to react with the isocyanate component and allows the resulting reaction gasses to leave the reaction mixture before the mixture is filled into the mold.

According to embodiments, the polyol component comprises polyethylene glycol (PEG) with a molecular weight of 4.000-6.000. Preferably, the PEG is an end-capped PEG, e.g. ethylene oxide end-capped PEG. The polyol component can basically consist of the PEG. Some few percentages by weight of the polyol component may consist of zeolites or other additives like UV stabilizers, pigments, or the like. The thermo-selective catalyst and the curing catalyst can also be added as part of the polyol component, but are typically added in a very small amount.

According to preferred embodiments, the polyol component is a mixture of a diol and a triol. For example, the polyol component is a mixture of a difunctional and a trifunctional polyether polyol, the difunctional polyether polyol having a viscosity at 25 °C of about 740 - 820 mPa/s, the trifunctional polyether polyol having a viscosity at 25°C of about 70-130 mPa/s. This may be advantageous, because the above mentioned mixture of diols and triols provide a compromise between viscosity and degree of interconnectedness of the generated PU mass.

According to embodiments, the isocyanate component comprises polymeric diphenylmethane diisocyanate (PMDI), also called "technical MDI". The PMDI is a mixture of methylenediphenyl isocyanates (MDIs) and aromatic polyisocyanates. The mixture comprises compounds respectively comprising two or more isocyanate groups. According to embodiments, the PMDI comprises polyphenyl-methan-polyisocyanat (CAS-number: 9016-87-9) and a reaction mixture of 4,4'-diphenyl-methan-diisocyanate and o-(p-isocyanatobenzyl)phenyl-isocyanate (CAS-number 26447-40-5). For example, the PMDI can comprise the polyphenyl-methan-polyisocyanat in an amount of 20-40% by its weight and can comprise the reaction mixture in an amount of 60-80% by its weight.

According to a further beneficial aspect, the generation and handling of the reaction mixture may greatly be facilitated, because all components can be added and mixed in a single step and can be mixed with each other and stirred for a long time, in some cases even several hours. This reduces the time pressure and the need to tightly control the duration of every workflow step as the reaction of the isocyanate component and the polyol component into polyurethane will not start before the heat and the pressure is applied on the mold comprising the reaction mixture.

In a further beneficial aspect, using a thermo-selective catalyst may ensure that the reaction is not started before the temperature of the liquid reaction mixture exceeds the activation temperature. Typically, it takes several minutes until the reaction mixture reaches this temperature, thereby leaving enough time for the liquid reaction mixture to reach and penetrate the mold completely, including small depressions of the surface of the mold. A complete penetration of the mold is particularly difficult to achieve at high pressures as the pressure has been observed to significantly accelerate the polymerization reaction to generate polyurethane. Thus, the use of a thermo-selective catalyst may allow filling a mold with a PU reaction mixture completely even at high pressures.

According to embodiments, the thermo-selective catalyst is an organic amine. For example, the organic amine can be 1,8-diazabicyclo[5.4.0]undec-7-ene (also known and commercially available as "DABCO BDO". For example, the thermo-selective catalyst can be added to the reaction mixture separately or can be added as part of the polyol component.

According to embodiments, the reaction mixture comprises a curing catalyst. The curing catalyst is adapted to boost the curing of the polyurethane of the polyurethane floor panel.

According to preferred embodiments, the curing catalyst is adapted to cause a complete hardening of the polyurethane matrix 10 minutes or, in some embodiments, even 7 minutes after the reaction mixture in the mold has reached or exceeded the activation temperature of the thermo-selective catalyst.

According to embodiments, the curing catalyst is not a thermo-selective catalyst but rather may already be active at room temperature. The curing catalyst ensures complete PU hardening at the end of the reaction, but does not initiate or trigger the polyurethane generation from the polyol and the isocyanate components to a significant extent. For example, only a very small amount of the curing catalyst is added. Thus, the curing catalyst alone does not result in a significant increase of viscosity and allows to thoroughly mix all components of the reaction mixture before the mixture is transferred into the mold. However, once the reaction mix is heated above the activation temperature, the thermo-selective catalyst will trigger the rapid reaction of the polyol component and the isocyanate component into PU. The thermo-selective catalyst, however, may not be able to trigger the PU generating reaction when the polymers have reached a high degree of polymerization. At this state of the reaction, the curing catalyst, which is not or only little sensitive to the degree of polymerization, the curing catalyst will ensure that the reaction components completely react and harden.

According to embodiments, the curing catalyst is an organotin compound.

For example, the organotin compound can be a dioctyltin mercaptide catalyst. An example of a suitable dioctyltin mercaptide catalyst is commercially available under the name "Fomrez UL-29".

According to embodiments, the reaction mixture comprises the thermo-selective catalyst in an amount of 0,03-0,05 % by weight of the reaction mixture, e.g. 0,0475 % DABCO DBU.

In addition, or alternatively, the reaction mixture comprises the curing catalyst in an amount of 0,0020-0,0030 % by weight of the reaction mixture. For example, the reaction mixture can comprise 0,0025% Fomrez UL-29.

Using the thermo-selective catalyst and the curing catalyst in the above specified amounts may be advantageous as it was observed that these particular amounts allow to achieve a fast reaction speed for generating and completely curing the polyurethane matrix in the mold.

According to embodiments, the method comprises drying the rubber powder before adding the rubber powder to the reaction mixture. This may ensure that the water does not react with isocyanate groups of the isocyanate component and thus may ensure that the generated floor panel is free of reaction gas bubbles.

In addition, or alternatively, the method comprises adding a zeolite as a further component of the liquid two-component polyurethane reaction mixture. For example, the zeolite can be added in an amount of 2-3% by weight of the reaction mixture or even in higher amounts, e.g. 10%. For example, the zeolite can be a molecular sieve type 4-A.

This may be advantageous as the zeolite removes water from the reaction component and, in particular, from the porous rubber dust. Thereby, the zeolite may prevent the generation of gas bubbles also in cases where the rubber particles or other components of the reaction mixture comprise some residual water. In a further aspect, adding a zeolite to the reaction mixture renders an additional preparatory step for drying the rubber powder unnecessary.

According to one embodiment, the zeolite is added such that a first part (e.g. 10 % by weight) of the zeolite is added to the rubber powder. This may be beneficial as this amount allows drying rubber powder. Rubber powder has been observed to often comprise water in an amount of 1.7-2.5 %. alternatively second part, e.g. 30% by weight of the zeolite, is added to the polyol component. The rest is added as the rubber component to the reaction mixture. This may ensure that the final PU floor panel is free of gas bubbles.

According to embodiments, the reaction mixture is free of water.

The floor panel production method described herein for embodiments of the invention can be applied e.g. for generating a polyurethane floor panel having one or more of the following desired properties: the material of the generated panel is basically bubble free; at least one surface of the generated floor panel is an anti-slip surface comprising depressions and/or elevations; the floor panel within the mold shows a homogeneous hardening behavior and is easily (without any damage to the panel or the mold) removable from the mold.

Damage-free removal of a hardened floor-panel from a mold was a challenge for state of the art floor panel production methods, in particular in case the mold comprised a complex surface profile with elevations and/or depressions, because such structures often prohibited a complete wetting of the inner mold surface by the viscous PU-rubber mixture and because during the opening of a mold, shear forces are generated at the elevations and depressions which may damage the panel material if the material is not hardened completely or comprises heterogeneous physical properties.

According to embodiments, the reaction mixture comprises the rubber powder in an amount of 55-85%, preferably 65%-75% by weight of the reaction mixture. In addition, or alternatively, the reaction mixture comprises the polyol component and the isocyanate component combined in an amount of 15-45%, preferably 25%-35% by weight of the reaction mixture.

According to embodiments, the reaction mixture has an NCO/OH ratio in a range of 1.05 to 1.25, preferably in a range of 1.15 to 1.2.

This may be beneficial, because the surplus of NCO-groups ensures that any water that may be contained e.g. as residual water within the polyol component or the porous rubber powder particles will react during the stirring phase with the isocyanate groups. Thus, it is ensured that even in case the rubber powder should comprise a significant amount of residual water, no gas bubbles are created when the mixture is filled into the mold and that a sufficient amount of NCO-groups is still available to react with the OH groups of the polyol component.

In a further beneficial aspect, the removal of residual water by an excess of NCO groups may increase the rigidity and dimensional stability (in particular in respect to shrinking) of the generated floor panel.

According to embodiments, the temperature exceeding the activation temperature is a temperature above 75°C, in particular above 80°C. According to embodiments, the temperature is below 115 °C.

According to embodiments, the pressure applied on the mold having been filled with the stirred reaction mixture in the range of 50-70 kg/cm², in particular 55-65 kg/cm².

Typically, the temperature and pressure is chosen such that the thermo-selective catalyst is activated and the polyurethane is completely cured and hardened before the mold is opened and the hardened panel is removed from the mold. By controlling and modifying the kind and amount of the rubber powder particles (e.g. EPDM, NBR or SBR rubber) and the pressure applied during the reaction and integration process, the properties of the floor panel may be determined. For example, by applying lower pressures, particularly soft and elastic floor panels can be obtained. If high pressure is applied that compresses the rubber particles by more than 50%, hard floor panels can be obtained which may be suited, for example, for race-courses. Thus, the elasticity of the floor panel may easily be adapted to the requirements of different use case scenarios and sport types.

According to embodiments, the mold has dimensions adapted to form a polyurethane floor panel being 1 mm-6mm, preferably 2-4 mm thick.

Using the floor panel production methods according to embodiments of the invention may be particularly suited for producing thin floor panels, in particular panels being less than 7 mm or even less than 5 mm thick. These floor panels may also be used as floor covering boards and covering panels configured to be installed on top of one or more other floor panels (and not directly on the ground).

According to embodiments, the mold comprises elevations and/or depressions for generating depressions and/or elevations on at least one surface of the polyurethane floor panel formed in the mold.

According to embodiments, the method further comprises generating the rubber powder. The generation of the rubber powder comprises granulating pieces of rubber into rubber granules; and cryogenically milling the rubber granules into rubber powder.

For example, the milling can be performed by using a hammer mill. The use of liquid nitrogen ensures that the desired small particle size is achieved.

The rubber can be, for example, EPDM (Ethylen-Propylen-Dien-monomer) rubber, or NBR (nitrile) rubber, or SBR (styrene-butadiene) rubber, or a mixture thereof.

According to embodiments, at least the polyol component, the isocyanate component and the thermo-selective catalyst are mixed with each other in a single step before the stirring is started. Thus, contrary to state of the art methods where the mixing of the rubber particles and the prepolymer was performed in a first step and the water acting as catalyst was added in a separate, further step, embodiments of the invention allow mixing all reacting components (e.g. polyol and isocyanate component) and non-reacting components (e.g. zeolite or the catalysts which trigger the reaction but are not transformed by the reaction) of the reaction mixture in a single step. This may facilitate the generation of the reaction mixture and may ensure a homogeneous distribution of the catalyst within the reaction educts.

In a further aspect, the invention relates to a polyurethane floor panel comprising a solid polyurethane matrix. Rubber powder particles are homogeneously embedded in the matrix. The floor panel comprises a thermo-sensitive catalyst adapted to trigger the reaction of the polyols and the isocyanate into polyurethane selectively in case the temperature of the reaction mixture exceeds an activation temperature of the thermo-selective catalyst.

Preferably, the activation temperature is above 75°C, e.g. at about 80°C to 90°C. The floor panel may in addition comprise a curing catalyst and/or a zeolite.

According to embodiments, the polyurethane floor panel is basically bubble-free and/or comprises elevations and/or depressions on at least one of its surfaces. The elevations and/or depressions are adapted to provide an anti-slip effect.

Preferably, the panel has a thickness of less than 7 mm.

### Brief description of the drawings

In the following embodiments of the invention are explained in greater detail, by way of example only, making reference to the drawings in which:
- Figure 1: is a flowchart of a method of producing a floor panel according to an embodiment of the invention,
- Figure 2: is a cross-sectional view of a reaction mixture within a mold,
- Figure 3: depicts a one-step process of generating a 2K reaction mixture that already comprises the thermo-selective catalyst, and
- Figure 4: shows a floor panel with anti-slip elevations.

### Detailed description

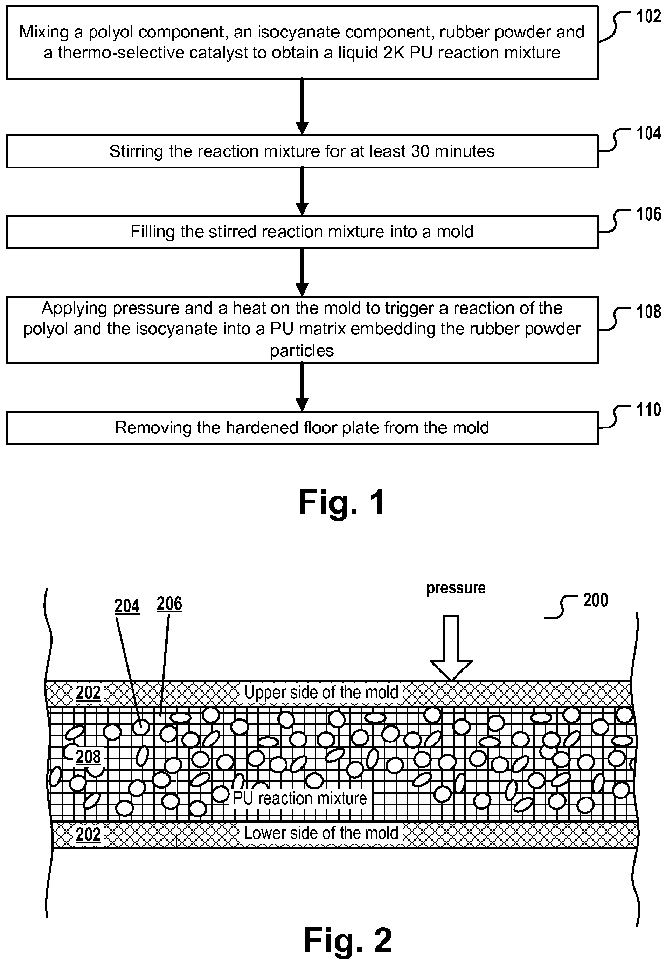

**Figure 1** is a flowchart of a method of producing a floor panel according to an embodiment of the invention.

In a first step 102, at least the following components are mixed: rubber powder 308, a polyol component 302, an isocyanate component 304, and a thermo-selective catalyst 306.

For example, the rubber powder can be produced from rubber scraps obtained from used tires from motor vehicles and trucks. The scraps are granulated and then cryogenically milled into rubber powder. This may have the advantage of reusing rather than disposing resources. This approach represents an effective and inexpensive way of recycling discarded tires. The obtained rubber powder particles have good mechanical properties, in particular low specific weight, thermal and acoustic isolation properties, elasticity, compressive strength and good energy absorption capacity. The rubber powder completely consists of or comprises a significant proportion (e.g. at least 40%) of particles of a size of less than 100 µm. The rubber powder particle size distribution can range e.g. from 0.1 µm to 180 µm.

The polyol component can comprise polyethylene glycol (PEG) with a molecular weight of 4.000-6.000 g/mol.

According to one embodiment, the polyol component is a mixture of a diol and a triol. The diol is preferably a difunctional (preferably highly reactive) polyether polyol, which contains primary hydroxyl groups. It contains an antioxidant which is free from BHT (2,6-Di-t-butyl-hydroxytoluene). Typical properties: OH Number of about 29 mg KOH/g, a viscosity at 25 °C of about 778 mPa/s, a water content of about 0.05 %, and a density at 25 °C of about 1.02 g/cm³ DIN 51 757.

The triol is preferably a trifunctional (preferably highly reactive) polyether polyol which contains primary hydroxyl groups. It is preferably free from BHT. Typical properties: OH Number of about 28 mg KOH/g, viscosity at 25 °C of about 100 mPa/s, water content of about 0.04 %, and density at 25 °C of about 1.02 g/cm³.

The isocyanate component can comprise a mixture of polyphenyl-mehtan-polyisocyanate, 4,4'MDI and o-(p-isocyanatobenzyl)phenyl-isocyanate. For instance, the isocyanate component can have a molar mass of about 250 g/mol, an NCO-content of 33.5 g/100 g, an 4,4'-MDI isomer content of 48 g/100 g and a viscosity at 25 °C of about 12 mPa and a density at 25 °C of about 1.19 g/cm³.

Using the above described polyol component and isocyanate component may have the advantage that both components are poorly reactive compared to other polyols and isocyanates used for producing polyurethane. Thus, the time during which the reaction mixture can be thoroughly mixed may be increased.

The thermo-selective catalyst, e.g. 1,8-diazabicyclo[5.4.0]undec-7-ene, does not trigger the reaction of the polyols and the isocyanates into polyurethane at room temperature. Therefore, the mixture generated in step 102 can be thoroughly mixed and stirred in step 104 at room temperature for a long time period, e.g. more than 15 minutes, more than 30 minutes or even 60 minutes to ensure a homogeneous distribution of all components of the reaction mixture. However, if the reaction mixture is heated about the activation temperature of the thermo-selective catalyst, e.g. is heated to 80°C, the thermo-selective catalyst will trigger the reaction of the polyol component and the isocyanate component into a polyurethane matrix. The reaction mixture generated in step 102 corresponds to a so called "2K" reaction mixture.

A "2K" PU reaction mixture is APU reaction mixture that will not react and harden into PU unless it is mixed with a catalyst (or unless an already present but an active catalyst is activated). The use of a 2K reaction mixture may in addition have the advantage that the polyurethane panels produced from such a mixture is less susceptible to damage from chemicals, whether or UV rays compared to floor panels produced from a "1 K" PU reaction mixture. A "1 K" PU reaction mixture can be described as a "single-component" reaction mixture that does not require a particular catalyst as the moisture already contained in the 1 K reaction mixture or the environment there it is applied is typically sufficient for causing the one K reaction mixture to harden into polyurethane.

A "catalyst" as used herein is a substance that causes or accelerates a chemical reaction without itself being affected. A curing catalyst as used herein is a catalyst capable of curing the reaction of the polyol component with the isocyanate component into PU and of completely hardening the generated PU mass. The curing catalyst is capable of catalyzing the PU generation reaction also at a late stage of the reaction at which the generated PU polymers are of high molecular mass.

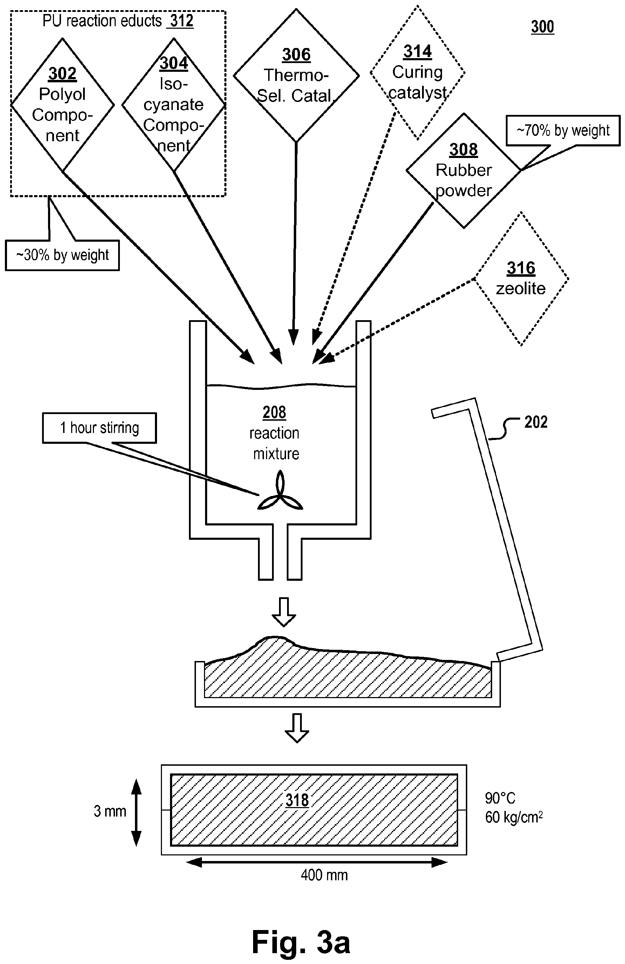

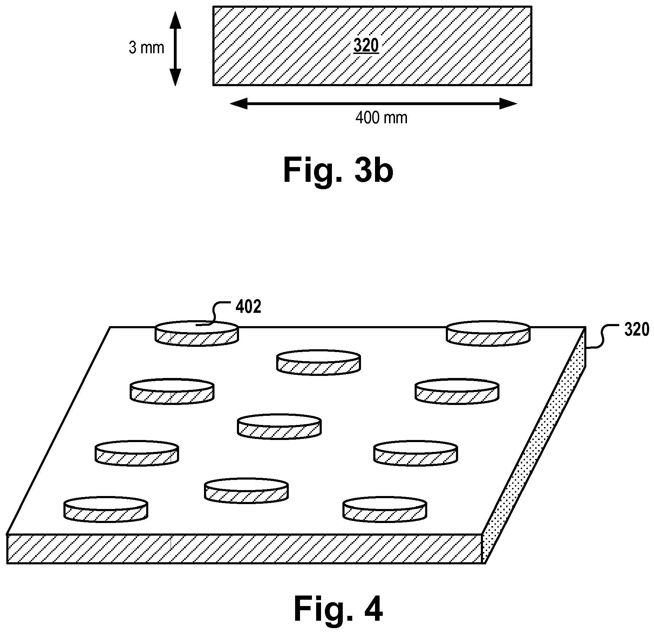

After the 2K PU reaction mixture was thoroughly stirred for at least 30 minutes in step 104, the stirred liquid reaction mixture is filled in step 106 into a mold 202 (see e.g. Figures 2 and 3). The mold may have the shape of a rectangle or square or any other form. Depending on the type of floor panel to be produced, the sides of the mold forming the rectangle square can be several centimeters and even more than 40 cm long. The mold can be dimensioned such that the height of the floor panel is in the range of 0.5-3 cm. However, preferably, the mold is dimensioned such that the height of the floor panel is smaller than 7 mm.

In some embodiments, the mold is already heated to a temperature that is close to or above the activation temperature of the thermo-selective catalyst. In preferred embodiments, the temperature of the mold is still below the activation temperature of the thermo-selective catalyst when the liquid reaction mixture is filled into the mold to ensure that the polymerization reaction to form the polyurethane is not prematurely triggered. The liquid reaction mixture is allowed to fill the mold and any depressions formed by the mold, if any, completely. Then, the mold is closed and heated about the activation temperature of the thermo-sensitive catalyst. In addition, pressure is applied on the mold in step 108. Preferably, the pressure is applied for at least 3 minutes, more preferably for at least 5 minutes. A typical time period for applying the pressure is in the range of 5-10 minutes. The pressure ensures that the liquid 2K PU mixture penetrates also smaller depressions and cavities defined by the mold and in addition compacts the rubber powder particles to a defined degree in order to produce floor panels with a defined elasticity.

After a time period sufficient for a complete polymerization of the adults and to complete hardening of the PU floor panel, the hardened floor panel is removed in step 110 from the mold. Typically, the PU polymerization reaction and the complete hardening takes about 10 to 30 minutes, depending on the particular composition of the reaction mixture and the dimensions of the mold.

**Figure 2** is a cross-sectional view of a reaction mixture within a mold 202. Figure 2 is only a schematic drawing: typically, the rubber powder particles 204 which are embedded in a cellular PU matrix 206 constitute about 70% by weight of the 2K PU reaction mixture 208 that is filled into the mold. Figure 2 shows a cross-section of a region of a closed mold comprising an upper side and the lower side. The two sides of the mold are mechanically fixed to each other such that a leaking of the liquid reaction mixture 208 is prevented. After the complete hardening of the reaction mixture 208, the mold is opened and the hardened floor panel is removed.

**Figure 3** depicts a one-step process 300 of generating a 2K reaction mixture 208. The reaction mixture does not only comprise a polyol component 302, an isocyanate component 304 and the rubber powder particles 308, but also comprises a thermo-selective catalyst 306. In addition, the reaction mixture may comprise one or more additional substances such as a zeolite 316 for removing any residual water from the reaction mixture or a curing catalyst 314 adapted to harden the polyurethane matrix at the end of the polymerization reaction between the polyol and the isocyanate component. The generation of the reaction mixture and the mixing of the substances contained therein can be directly performed in a container that comprises means, e.g. a stirrer, for homogeneously mixing all components of the reaction mixture. After a homogeneous 2K PU reaction mixture is generated, the mixture is drained through an outlet of the container and transfer it into one or more floor panel molds 202. At the bottom of figure 3A, a cross-sectional view of a closed floor panel mold comprising a hardened PU mass with embedded rubber particles 318 is shown. The floor panel may have a width of 400 mm and a height of 3 mm. The above described approach for generating PU-based floor panels comprising a PU matrix with embedded rubber powder particles may ensure that the floor panel mass 318 is free of bubbles, mechanically stable and shows homogeneous physicochemical properties. Figure 3B shows the hardened floor panel having been removed from the mold without any damages to its surface.

Floor panels produced according to embodiments of the invention may be used for many different kinds of outdoor sports grounds and indoor sports halls in need of pavement with defined qualities depending on the type of sports or other form of activities that will be practiced. Sports floor surfaces should be soft enough for the various sports to protect the players from injuries and should have less running costs.

In a test series, various combinations of physicochemical parameters were tested. Some of these combinations resulted in the production of bubble free, dimensionally stable floor panels. The following parameter combination was observed to provide a floor plate having particularly desirable properties (bubble free, dimensionally stable):

| Rubber Powder [g] | Polyol Component (4600 PEG) [g] | Isocyanate Component [g] | Catalyst Mixture [%] by weight | Stirring dura-tion [min] | Time of applying pressure [min] | Mould temperature [°C] |
|---|---|---|---|---|---|---|
| 1130 | 370 | 130 | 2% | 30 | 6 | 90 |

The catalyst mixture was added to an amount of 2% by weight to the reaction mixture. The catalyst mixture comprised the thermo-selective catalyst in an amount of 3% by weight of the catalyst mixture and the curing catalyst in an amount of 2% by weight of the catalyst mixture, so the overall amount of the catalysts in the reaction mixture was low. At first, the polyol component, the isocyanate component and the catalyst mixture was homogeneously mixed. Then, this mixture was mixed with the rubber powder until all components of the mixture were homogeneously distributed. The resulting mixture was put into a mold at 90° C and pressure was applied on the mold. The reaction mixture was kept in the mold under pressure and 90°C for 10 minutes and then the resulting floor panel was removed.

**Figure 4** shows a floor panel with several elevations 402 on the upper surface of the floor panel. Those elevated structures are beneficial in several use case scenarios as they may provide an anti-slip effect. Embodiments of the invention may allow generating floor panels with a complex 3D surface structure. The 3D surface structure may have a structure chosen in order to achieve a desired design effect, e.g. a particular way of reflecting or scattering light, or may have a 3D structure chosen in order to achieve a desired physical effect, e.g. providing an anti-slip surface.

### List of reference numerals

- 102-110: steps
- 200: cross-section of composite PU reaction mixture within mold
- 202: upper and lower side of the mold
- 204: rubber powder particles
- 206: polyurethane matrix
- 208: polyurethane/rubber powder reaction mixture
- 300: process of manufacturing a floor panel
- 302: first component
- 304: second component
- 306: thermo-selective catalyst
- 308: rubber powder
- 314: curing catalyst
- 316: zeolite
- 318: hardened floor panel within mold
- 320: floor panel removed from mold
- 402: anti-slip elevation on the upper surface of a PU floor panel 320

## Claims

1. A method of producing a polyurethane floor panel (320), the method comprising:
- mixing (102) rubber powder (308), a polyol component (302), an isocyanate component (304) and a thermo-sensitive catalyst (306) for creating a liquid two-component polyurethane reaction mixture (208), the thermo-sensitive catalyst (306) being adapted to trigger the reaction of the polyols and the isocyanate into polyurethane selectively in case the temperature of the reaction mixture exceeds an activation temperature of the thermo-selective catalyst;
- stirring (104) the reaction mixture for at least 15 minutes, preferably for at least 30 minutes;
- filling (106) the stirred liquid reaction mixture into a mold (202) having the shape of the floor panel;
- applying (108) pressure under a temperature that exceeds the activation temperature on the mold for letting the polyol and the isocyanate react within the mold into a solid polyurethane matrix, the matrix embedding the rubber powder particles and forming the polyurethane floor panel; and
- removing (110) the hardened polyurethane floor panel from the mold.

2. The method of claim 1, the thermo-selective catalyst being an organic amine.

3. The method of claim 2, the organic amine being 1,8-diazabicyclo[5.4.0]undec-7-ene.

4. The method of any one of the previous claims, the reaction mixture comprising a curing catalyst (314), the curing catalyst being adapted to boost the curing of the polyurethane into the hardened polyurethane floor panel.

5. The method of claim 4, the curing catalyst being an organotin compound.

6. The method of claim 5, the organotin compound being a dioctyltin mercaptide catalyst.

7. The method of any one of the previous claims,
- the reaction mixture comprising the thermo-selective catalyst in an amount of 0,03-0,05 % by weight of the reaction mixture; and/or
- the reaction mixture comprising the curing catalyst in an amount of 0,0020-0,0030 % by weight of the reaction mixture.

8. The method of any one of the previous claims, the mixing further comprising:
- adding a zeolite (316) to the polyol component and/or to the rubber powder for creating the liquid two-component polyurethane reaction mixture (208).

9. The method of any one of the previous claims, the reaction mixture being free of water.

10. The method of any one of the previous claims used for generating a polyurethane floor panel having one or more of the following properties:
- bubble free;
- anti-slip surface with depressions and/or elevations (402);
- easily removable from the mold.

11. The method of any one of the previous claims,
- the reaction mixture comprising the rubber powder (308) in an amount of 55-85%, preferably 65%-75% by weight of the reaction mixture; and/or
- the reaction mixture comprising the polyol component and the isocyanate component combined in an amount of 15-45%, preferably 25%-35% by weight of the reaction mixture.

12. The method of any one of the previous claims, the reaction mixture having an NCO/OH ratio in a range of 1.05 to 1.25, preferably 1.15 to 1.2.

13. The method of any one of the previous claims, the temperature exceeding the activation temperature being a temperature above 75°C, in particular above 80°C.

14. The method of any one of the previous claims, the pressure being in the range of 50-70 kg/cm², in particular 55-65 kg/cm².

15. The method of any one of the previous claims , the mold having dimensions adapted to form a polyurethane floor panel being 1 mm-6mm, preferably 2-4 mm thick.

16. The method of any one of the previous claims, the mold comprising elevations and/or depressions for generating depressions and/or elevations (402) on the surface of the polyurethane floor panel formed in the mold.

17. The method of any one of the previous claims ,
- the polyol component comprising polyethylene glycol with a molecular weight of 4.000-6.000 g/mol; and/or
- the isocyanate component comprising polyphenyl-methan-polyisocyanate, 4,4'-diphenylmethane diisocyanate (MDI), and o-(p-isocyanatobenzyl)phenyl-isocyanat.

18. The method of any one of the previous claims, wherein at least the polyol component, the isocyanate component and the thermo-selective catalyst are mixed with each other in a single step before the stirring is started.

19. A polyurethane floor panel (302) comprising a solid polyurethane matrix (206), wherein rubber powder particles (204) are homogeneously embedded in the matrix, the floor panel comprising a thermo-sensitive catalyst (306), the thermo-sensitive catalyst being adapted to trigger the reaction of polyols and isocyanates into polyurethane selectively in case the temperature of the reaction mixture exceeds an activation temperature of the thermo-selective catalyst.

20. The polyurethane floor panel of claim 19 being bubble-free and/or comprising elevations (402) and/or depressions on at least one of its surfaces adapted to provide an anti-slip effect.

## Amended claims

### Amended claims in accordance with Rule 137(2) EPC.

1. A method of producing a polyurethane floor panel (320), the method comprising:
- mixing (102) rubber powder (308), a polyol component (302), an isocyanate component (304), a curing catalyst (314) and a thermo-sensitive catalyst (306) for creating a liquid two-component polyurethane reaction mixture (208), the thermo-sensitive catalyst (306) being adapted to trigger the reaction of the polyols and the isocyanate into polyurethane selectively in case the temperature of the reaction mixture exceeds an activation temperature of the thermo-selective catalyst, the reaction mixture comprising the thermo-sensitive catalyst in an amount of 0,03-0,05 % by weight of the reaction mixture and comprising the curing catalyst in an amount of 0,0020-0,0030 % by weight of the reaction mixture;
- stirring (104) the reaction mixture for at least 15 minutes, preferably for at least 30 minutes;
- filling (106) the stirred liquid reaction mixture into a mold (202) having the shape of the floor panel;
- applying (108) pressure under a temperature that exceeds the activation temperature on the mold for letting the polyol and the isocyanate react within the mold into a solid polyurethane matrix, the matrix embedding the rubber powder particles and forming the polyurethane floor panel, the curing catalyst being adapted to boost the curing of the polyurethane into the hardened polyurethane floor panel; and
- removing (110) the hardened polyurethane floor panel from the mold.

2. The method of claim 1, the thermo-selective catalyst being an organic amine.

3. The method of claim 2, the organic amine being 1,8-diazabicyclo[5.4.0]undec-7-ene.

4. The method of any one of the previous claims, the curing catalyst being an organotin compound.

5. The method of claim 4, the organotin compound being a dioctyltin mercaptide catalyst.

6. The method of any one of the previous claims, the mixing further comprising:
- adding a zeolite (316) to the polyol component and/or to the rubber powder for creating the liquid two-component polyurethane reaction mixture (208).

7. The method of any one of the previous claims, the reaction mixture being free of water.

8. The method of any one of the previous claims used for generating a polyurethane floor panel having one or more of the following properties:
- bubble free;
- anti-slip surface with depressions and/or elevations (402);
- easily removable from the mold.

9. The method of any one of the previous claims,
- the reaction mixture comprising the rubber powder (308) in an amount of 55-85%, preferably 65%-75% by weight of the reaction mixture; and/or
- the reaction mixture comprising the polyol component and the isocyanate component combined in an amount of 15-45%, preferably 25%-35% by weight of the reaction mixture.

10. The method of any one of the previous claims, the reaction mixture having an NCO/OH ratio in a range of 1.05 to 1.25, preferably 1.15 to 1.2.

11. The method of any one of the previous claims, the temperature exceeding the activation temperature being a temperature above 75°C, in particular above 80°C.

12. The method of any one of the previous claims, the pressure being in the range of 50-70 kg/cm², in particular 55-65 kg/cm².

13. The method of any one of the previous claims , the mold having dimensions adapted to form a polyurethane floor panel being 1mm-6mm, preferably 2-4 mm thick.

14. The method of any one of the previous claims, the mold comprising elevations and/or depressions for generating depressions and/or elevations (402) on the surface of the polyurethane floor panel formed in the mold.

15. The method of any one of the previous claims ,
- the polyol component comprising polyethylene glycol with a molecular weight of 4.000-6.000 g/mol; and/or
- the isocyanate component comprising polyphenyl-methan-polyisocyanate, 4,4'-diphenylmethane diisocyanate (MDI), and o-(p-isocyanatobenzyl)phenyl-isocyanat.

16. The method of any one of the previous claims, wherein at least the polyol component, the isocyanate component and the thermo-selective catalyst are mixed with each other in a single step before the stirring is started.

17. A polyurethane floor panel (302) comprising a solid polyurethane matrix (206), wherein rubber powder particles (204) are homogeneously embedded in the matrix, the floor panel comprising a thermo-sensitive catalyst (306) and a curing catalyst (314), the thermo-sensitive catalyst being adapted to trigger the reaction of polyols and isocyanates into polyurethane selectively in case the temperature of the reaction mixture exceeds an activation temperature of the thermo-selective catalyst, the curing catalyst being adapted to boost the curing of the polyurethane into the polyurethane floor panel, the polyurethane matrix being the reaction product of a reaction mixture comprising the thermo-sensitive catalyst in an amount of 0,03-0,05 % by weight of the reaction mixture and comprising the curing catalyst in an amount of 0,0020-0,0030 % by weight of the reaction mixture.

18. The polyurethane floor panel of claim 17 being bubble-free and/or comprising elevations (402) and/or depressions on at least one of its surfaces adapted to provide an anti-slip effect.
